# EUROPEAN PATENT SPECIFICATION

(11) **EP 2 105 512 B1**
(45) Date of publication and mention of the grant of the patent: **14.12.2011**
(21) Application number: 09004186.4
(22) Date of filing: 24.03.2009
(51) Int. Cl.: C22C 21/00, F16C 33/12

(54) **Aluminium-based bearing alloy**
Aluminiumbasierte Lagerlegierung
Alliage pour coussinet à base d'aluminium

(30) Priority: 25.03.2008 JP 2008078114
(43) Date of publication of application: 30.09.2009
(73) Proprietor: Daido Metal Company Ltd., Nagoya (JP)
(72) Inventor: Nirasawa, Tomoyuki, Inuyama-shi Aichi (JP); Kawakami, Naohisa, Inuyama-shi Aichi (JP); Kagohara, Yukihiko, Inuyama-shi Aichi (JP); Inami, Shigeru, Inuyama-shi Aichi (JP)
(74) Representative: Beckmann, Claus

(56) References cited:
- EP-A1- 1 188 501
- AU-B2- 543 895
- GB-A- 2 066 845
- GB-A- 2 066 846
- GB-A- 2 271 779
- US-A- 4 452 866
- EXNER, H. E. ET AL: "Effects of microstructure on wear of aluminum bearing alloys with systematic variation of hard and soft phases" MATERIALWISSENSCHAFT UND WERKSTOFFTECHNIK , 31(3), 215-223 CODEN: MATWER; ISSN: 0933-5137, 2000, XP002535540
- MWANZA, M. C. ET AL: "Microstructural characterisation of fatigue crack initiation in Al-based plain bearing alloys" INTERNATIONAL JOURNAL OF FATIGUE , 25(9-11), 1135-1145 CODEN: IJFADB; ISSN: 0142-1123, 2003, XP002535541

## Description

### Field of the invention

The present invention relates to an aluminum-based bearing alloy suitable for a sliding member.

### Background of the invention

A sliding bearing lined with an aluminum-based bearing alloy with excellent fatigue resistance has been well accepted as a bearing for an automobile engine. An Al-Sn-based bearing alloy and an Al-Sn-Si-based bearing alloy are widely used as aluminum-based bearing alloys. The aluminum-based bearing alloy thus contains tin (Sn) which is a soft and has a low melting point. The role of tin is summarized as follows: The element, tin, is interspersed in the bearing alloy, and melts when the temperature of the sliding surface becomes high, which prevents the aluminum from adhering to a counterpart shaft. When tin melts, the heat of fusion lowers the temperature of the sliding surface and prevents seizure.

Such a sliding bearing lined with the aluminum-based bearing alloy (hereinafter simply referred to as a bearing) is manufactured through the following processes sequentially: casting, rolling, press bonding, heat treatment, and machining (see JP-A-2002-120047, Paragraph 0004, for example). In the casting process, an aluminum-based bearing alloy is melted and cast into a plate. The cast plate-shaped aluminum-based bearing alloy is rolled in the rolling process, and bonded under pressure to a steel plate (back metal layer) with an thin aluminum or aluminum alloy plate (bonding layer) interposed in the pressure bonding process, and thus a bearing forming plate is produced. The bearing forming plate is then annealed to increase the bonding strength between the aluminum-based bearing alloy and the steel plate, and finally machined to form a semi-cylindrical or cylindrical bearing.

As recent automobile engines tend to be increasingly lighter, smaller, and more high-powered, a bearing is required to have excellent fatigue resistance under a high surface pressure. To meet the requirement of improving fatigue resistance, following methods have been employed: adding copper, manganese, vanadium, and other elements to the aluminum-based bearing alloy to strengthen the matrix (see e.g. JP-A-6-136475); adding chromium and zirconium to the aluminum-based bearing alloy followed by a solution treatment to strengthen the matrix (see e.g. JP-A-2000-17363); and reducing the amount of tin from the aluminum-based bearing alloy. Since reducing the amount of tin to enhance fatigue resistance is an ordinary technology, no appropriate known publications have been found.

The document:
MWANZA, M. C. et al. : "Microstructural characterisation of fatigue crack initiation in Al-based plain bearing alloys", INTERNATIONAL JOURNAL OF FATIGUE, 25(9-11), 1135-1145 CODEN: IJFADB; ISSN: 0142-1123, 2003, XP002535541
   discloses AI-20Sn and AI-12Sn-4Si aluminium-based bearing alloys with average region partitioned areas of the tin grains.

### Summary of the invention

When a bearing deforms due to misalignment when the bearing is assembled to a housing or insufficient rigidity of the housing in association with reduction in weight and size of an engine, an uneven contact phenomenon likely occurs, in which the counterpart shaft comes into uneven and hard contact with the bearing, especially in an early stage of the operation. In this case, a conventional aluminum-based bearing alloy has relatively low hardness, and uneven contact simply results in elastic deformation and unlikely ends up with oil film shortage. Therefore, uneven contact simply results in weak metal contact, and the aluminum-based bearing alloy quickly conforms to the counterpart shaft.

In an aluminum-based bearing alloy having improved fatigue resistance in accordance with any of the methods described above, however, the aluminum-based bearing alloy has increased not only strength but also hardness, which makes it difficult to deform against uneven contact, and likely resulting in oil film shortage and metal contact. The metal contact causes the portions under uneven contact to be heated and adhere to the counterpart shaft, resulting in seizure. In particular, a bearing having a reduced amount of tin likely suffers from seizure.

The present invention has been made in view of the above circumstances. An object of the present invention is to provide an aluminum-based bearing alloy capable of improving seizure resistance while maintaining good fatigue resistance.

When the sliding surface, which is the surface of the bearing alloy, comes into uneven contact with the counterpart shaft, seizure does not occur if oil film shortage does not occur. Oil film shortage does not occur when the sliding surface has excellent wettability with lubricant. The present inventors have conducted intensive experiments to obtain an aluminum-based bearing alloy with good wettability, and found that the wettability of the sliding surface is increased when tin grains in the matrix in the aluminum-based bearing alloy are made fine within a certain range to increase the interface area between the matrix and each of the tin grains.

Wettability depends on the magnitude of the surface energy. When the surface energy at the sliding surface is increased, the wettability with the lubricant increases. There is a boundary between each of the tin grains and the matrix in an aluminum-based bearing alloy, and there is hence interface energy. Reducing the size of the tin grains increases the interface area between each of the tin grains and the matrix, whereby the interface energy can be increased. The increased interface energy increases the surface energy at the sliding surface and hence the wettability with the lubricant. The present inventors have also found that when the tin grains are too fine, increases the hardness of the aluminum-based bearing alloy and hence degrades the conformability.

Based on the results of the experiments described above, the present invention, which is defined in claim 1, provides an aluminum-based bearing alloy containing not less than 2 mass% but not more than 20 mass% of tin. In the aluminum-based bearing alloy, size of at least 70% of tin grains in a sliding surface is not less than 20 µm² but not more than 50 µm² when expressed in an average region partitioned areas of the tin grains measured in accordance with a region partitioning method.

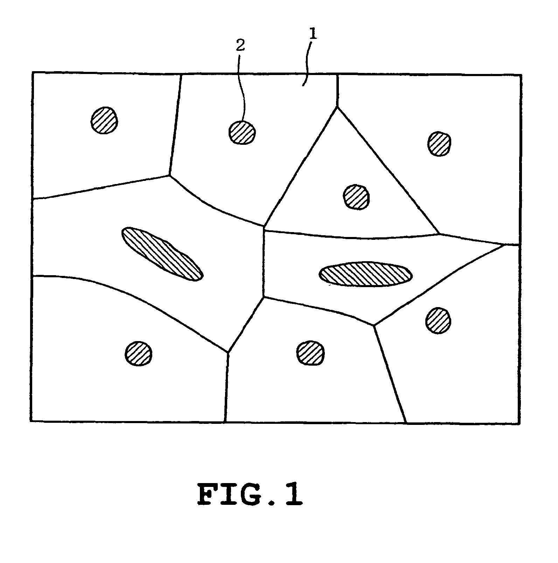

The region partitioning method involves, as shown in Fig. 1, drawing a line between each pair of adjacent tin grains 2 in a matrix 1 (in the present invention, a line that separates Voronoi polygons obtained by converting the tin grains in an observation area) to define regions which each single tin particle 2 occupies (regions surrounded by the drawn lines), calculating statistically the region areas, and quantitatively judging the region partitioned areas. That is, provided that the content of tin is fixed, the size of tin grains correlates with the number of tin grains; larger tin grains result in a smaller number of grains and larger region partitioned areas (the average region area occupied by a single particle). In contrast, smaller tin grains result in a greater number of grains and smaller region partitioned areas. The size of the region partitioned areas can therefore quantitatively show the size of the tin grains.

According to the present invention having the above features, the average region partitioned area of the tin grains is not less than 20 µm² but not more than 50 µm². The region partitioned areas of at least 70% of the tin grains in an observation area are not less than 20 µm² but not more than 50 µm². Preferably, the region partitioned areas of at least 95% of the tin grains are not less than 30 µm² but not more than 40 µm². The tin grains are fine grains whose average size is within a predetermined range and have large boundary areas with the matrix, whereby large surface energy at the sliding surface and good wettability with lubricant are achieved. Therefore, although an aluminum-based bearing alloy has improved fatigue resistance and, in general, accordingly an increased matrix hardness, the good wettability likely prevents oil film shortage even when a counterpart member comes into uneven and hard contact with the sliding surface. The seizure resistance can therefore be improved while the good fatigue resistance is maintained.

The content of tin ranging not less than 2 mass% but not more than 20 mass% leads to excellent conformability, excellent adherence prevention and reduction in temperature at the sliding surface due to melting of tin at high temperatures, as well as high strength, and resistance to high surface pressures. Moreover, the amount of tin ranging not less than 2 mass% but not more than 20 mass% is an appropriate content that allows the region partitioned areas of the tin grains to range not less than 20 µm² but not more than 50 µm², and can also set the boundary areas between the tin grains and the matrix to appropriate values. More preferably, the region partitioned areas of the tin grains range not less than 30 µm² but not more than 40 µm².

As a method for reducing the region partitioned areas of the tin grains within a range of not less than 20 µm² but not more than 50 µm², the processing strain is accumulated during the processes from the casting in which the aluminum-based bearing alloy is cast or heat treatment for tempering performed immediately after the casting, until heat treatment performed immediately before the aluminum-based bearing alloy is machined into a bearing. Heat treatment for annealing is performed for the first time before the aluminum-based bearing alloy is machined into the bearing. Post-casting rolling for producing a plate having a predetermined thickness, rolling for bonding the plate to a steel plate under pressure, and other rolling processes elongate the tin grains along the rolling direction. When the elongated tin grains are heated to a temperature of not lower than the melting point of tin in the heat treatment performed before the aluminum-based bearing alloy is machined into the bearing, the tin grains tend to shrink into spheres due to their surface tension and hence separate into fine grains. In this process, the greater the amount of strain accumulated by the rolling and other processes is, the finer is the tin grains.

In the present invention, the matrix may contain an intermetallic compound made of aluminum and at least two other metallic elements. The number of the intermetallic compound grains whose size is smaller than 1 µm may be not less than 300 in an observation area of 20 µm × 15 µm.

After the aluminum-based bearing alloy is cast and then subject to the heat treatment for tempering, the intermetallic compound described above precipitates during the heat treatment and helps for fine dispersion of the tin grains. That is, the intermetallic compound described above prevents dislocation movement in the matrix in the rolling and other machining processes. At the periphery of the intermetallic compound having the capability described above, strain is likely accumulated, and strain energy necessary to recrystallize the tin grains is accumulated. Therefore, controlling the amount of the intermetallic compound can contribute to dispersion of the fine tin grains. Furthermore, since the intermetallic compound is in the form of fine grains whose size is smaller than 1 µm, the matrix is strengthened and the fatigue resistance is improved. The effects of the intermetallic compound described above are well brought out when the number of intermetallic compound grains is not less than 300 in an observation area of 20 µm × 15 µm.

In the present invention, the elements other than aluminum, that form the intermetallic compound, may be at least two elements selected from the group consisting of manganese (Mn), vanadium (V), chromium (Cr), cobalt (Co), iron (Fe), nickel (Ni), tungsten (W), titanium (Ti), and zirconium (Zr). In this case, a total amount of the at least two elements preferably ranges not less than 0.01 mass% but not more than 3 mass%.

Manganese, vanadium, chromium, cobalt, iron, nickel, and tungsten are transition elements and not only form, in combination with aluminum, an intermetallic compound capable of preventing the dislocation movement described above but also disperse by themselves in the matrix. Since the above transition elements hardly solid solute, they are not expected to strengthen the matrix by solid solution. However, the elements dispersed in the matrix are capable of securely fixing the intermetallic compound in the matrix by affinity between the above elements and the intermetallic compound containing the same. Therefore, the intermetallic compound advantageously provides a strong dislocation movement prevention capability to accumulate large strain energy.

The aluminum-based bearing alloy of the present invention may further contain not less than 2 mass% but not more than 6 mass% of silicon. Silicon works for lapping on a counterpart shaft to enhance seizure resistance, and becomes fine grains and disperses in the matrix to increase the strength and improve the fatigue resistance.

Furthermore, the aluminum-based bearing alloy of the present invention may further contain at least one element selected from the group consisting of copper (Cu), zinc (Zn), and magnesium (Mg), a total amount of which is not less than 0.1 mass% but not more than 7 mass%.

Copper, zinc, and magnesium are solid-soluble elements and solid solute in the matrix to strengthen the matrix.

### Brief description of the drawing

Fig. 1 is a conceptual schematic view for explaining a region partitioning method.

### Detailed description of the invention

An example of the present invention will be specifically described below.

The aluminum bearing alloys were cast into plates, by the belt caster disclosed in JP-A-2002-120047, which alloys had compositions shown in Table 1 below. The aluminum bearing alloys were heat-treated for tempering (for example, for 5 hours at approximately 350°C). The heat treatment causes fine intermetallic compound grains to crystallize in the aluminum bearing alloys containing the transition elements. Each of the cast aluminum bearing alloys was made to have a thickness of 18 mm.

**[Table 1]**

| | No. | Composition | | | | | | | Elongation | Number of intermetallic compound smaller than 1 µm | Tin region partitioned area |
|---|---|---|---|---|---|---|---|---|---|---|---|
| | | Al | Sn | Si | Cu | Mn | v | Fe | % | Number/ (20 × 15) µm² | µm² |
| Invention examples | 1 | Balance | 20 | - | 1 | - | - | - | 5100 | 0 | 50 |
| | 2 | Balance | 8 | 2.5 | 1 | 0.3 | 0.2 | 0.2 | 4000 | 380 | 45 |
| | 3 | Balance | 8 | 2.5 | 1 | 0.2 | 0.1 | 0.2 | 4000 | 270 | 50 |
| | 4 | Balance | 8 | 2.5 | 1 | 0.3 | 0.2 | 0.2 | 4200 | 390 | 35 |
| | 5 | Balance | 8 | 2.5 | 1 | 0.3 | 0.2 | 0.2 | 4400 | 390 | 20 |
| | 6 | Balance | 8 | 2.5 | 1 | 0.2 | 0.1 | 0.2 | 4400 | 270 | 25 |
| | 7 | Balance | 8 | 2.5 | 1 | 0.2 | 0.2 | 0.2 | 3900 | 300 | 50 |
| Conventional examples | 11 | Balance | 20 | - | 1 | - | - | - | 3300 | 0 | 115 |
| | 12 | Balance | 8 | 2.5 | 1 | 0.3 | 0.2 | 0.2 | 3300 | 370 | 85 |
| | 13 | Balance | 8 | 2.5 | 1 | 0.2 | 0.1 | 0.2 | 3300 | 260 | 100 |
| | 14 | Balance | 8 | 2.5 | 1 | 0.3 | 0.2 | 0.2 | 3600 | 390 | 65 |
| | 15 | Balance | 8 | 2.5 | 1 | 0.3 | 0.2 | 0.2 | 4600 | 380 | 15 |

Each of the cast and tempered aluminum bearing alloy plates was rolled by a roller and then bonded under pressure to a thin aluminum or aluminum alloy plate to produce a multilayer aluminum alloy plate. The multilayer aluminum alloy plate was then bonded under pressure to a back-metal steel plate. A bearing forming plate (bimetal) comprised of three layers of the steel plate (back metal layer), the bonding aluminum or aluminum alloy plate (intermediate layer), and the aluminum bearing alloy plate (bearing alloy layer) was thus produced. The bearing alloy layer was 0.45 mm in thickness. The produced bearing forming plate was heated to anneal at a temperature of not lower than the recrystallization temperature of the matrix. All the rolling processes described above were cold rolling.

Table 1 also shows the degree of machining (primarily cold rolling) on the aluminum bearing alloy plates from the heat treatment for tempering to the annealing for recrystallization after the bearing forming plate was produced. The degree of machining is expressed in elongation rate. The elongation rate is a value obtained by dividing the length after machining by the length before machining and expressed in percentage. The strain energy generated by the machining and accumulated in each of the aluminum bearing alloy plates is the energy necessary for recrystallization.

For references, in JP-A-2002-120047, each aluminum bearing alloy is 15 mm in thickness immediately after the casting, and the elongation rate when each aluminum bearing alloy is rolled into 0.45 mm in thickness is approximately 3300%, which significantly differs from the elongation rates of the examples of the invention.

When the aluminum bearing alloy plate is subjected to post-casting heat treatment for tempering, an intermetallic compound is generated and dispersed in the matrix as fine grains smaller than 1 µm. The fine intermetallic compound grains serve to prevent dislocation movement in the matrix so as to accumulate strain at the periphery of the intermetallic compound grains. More strain energy necessary for recrystallization that facilitates fine tin grains is thus accumulated.

Through annealing for recrystallization, tin grains in the matrix are made in fine grains. The annealed bearing alloy layer was observed with an electron microscope, and the photographed image was used to measure the size and the number of the intermetallic compound grains as well as the region partitioned areas of the tin grains in accordance with the region partitioning method. Table 1 shows the results.

The produced bearing forming plates were machined into halved bearings. A seizure test was conducted on the halved bearings under the conditions shown in Table 2, and the results are shown in Table 3.

**[Table 2]**

| | Seizure test conditions |
|---|---|
| Rotating speed | 7200 rpm |
| Test load | Incremented by 10 MPa every 10 minutes |
| Lubricant temperature | 100°C |
| Amount of lubricant | 80 ml/min |
| Lubricant | VG22 |
| Shaft material | S55C |
| Evaluation method | seizure is judged to occur when temperature of backside of bearing becomes greater than 200°C or torque variation causes shaft-driving-belt to slip |

**[Table 3]**

| | No. | Maximum surface pressure that did not cause seizure |
|---|---|---|
| | | MPa |
| Invention examples | 1 | 80 |
| | 2 | 85 |
| | 3 | 85 |
| | 4 | 90 |
| | 5 | 85 |
| | 6 | 85 |
| | 7 | 85 |
| Conventional examples | 11 | 65 |
| | 12 | 75 |
| | 13 | 70 |
| | 14 | 75 |
| | 15 | 70 |

From the measurement results in Table 1, each of the tin region partitioned areas in examples 1 to 7 of the invention is not less than 20 µm² but not more than 50 µm², which is within an adequate range. Comparing the invention example 1 with the invention examples 2 to 7, it is seen that it is advantageous to have fine intermetallic compound grains smaller than 1 µm in order to reduce the tin region partitioned areas.

On the other hand, comparing the invention example 1 with the conventional example 11, both of which do not include intermetallic compound, the machining elongation rate in the conventional example 11 is smaller than that in the invention example 1. The smaller elongate rate in the conventional example 11 is believed to be the cause of the larger tin region partitioned area. It is therefore found that, when no intermetallic compound is present, the elongation rate needs to be large (5100%, for example) to obtain fine tin grains. In the conventional examples 12 to 14, although they include intermetallic compounds, the tin region partitioned areas are larger than 50 µm² since the elongation rates are small. In the conventional example 15 including an intermetallic compound, the tin region partitioned area is 15 µm², which is too small, since the elongation rate is too large. Therefore, when an intermetallic compound is present, it is believed that a reasonable elongation rate ranges not less than 3900% but not more than 4400%, while the reasonable range depends on the amount of the intermetallic compound. In the production method described in JP-A-2002-120047, each cast aluminum bearing alloy plate is 15 mm in thickness (see paragraph [0030]), and the elongation rate when the plate is rolled into 0.45 mm in thickness is approximately 3300%.

In view of the invention examples 2 to 7 including intermetallic compounds, it is advantageous for making the tin grains fine to include a greater number of intermetallic compound grains smaller than 1 µm. Furthermore, comparing the invention examples 2 and 3 with the invention examples 5 and 6, a greater elongation rate serves to obtain the fine tin grains. From the invention examples 2 and 3, it is further advantageous in reducing the size of the tin grains to include not smaller than 300 intermetallic compound grains smaller than 1 µm in an observation area of 20 µm × 15 µm, when the elongation rate is small (the degree of machining is small).

The results of the seizure test are now analyzed. Since the seizure test is carried out under the conditions of insufficient lubricant where an amount of lubricant supply is reduced, better seizure resistance is obtained as the bearing surface (the surface of the aluminum bearing alloy) has better wettability. The seizure test therefore measures the wettability of the aluminum bearing alloy at the same time.

According to Table 3, the invention examples 1 to 6 having the tin partitioned areas ranging not less than 20 µm² but not more than 50 µm² are excellent in seizure resistance. In contrast, it is seen that the conventional examples 11 to 15 are inferior to the invention examples 1 to 6 in terms of seizure resistance since the maximum surface pressures that do not cause seizure are lower. A probable reason therefor is as follows. In each of the invention examples 1 to 6, since the tin grains are fine, the wettability of the aluminum bearing alloy with the lubricant increases. Therefore, even when the aluminum bearing alloy comes into uneven contact with a counterpart shaft, the good wettability allows the lubricant to be brought into the portion where the uneven contact occurs, unlikely resulting in oil film shortage but resulting in improvement in seizure resistance. Therefore, according to the present invention, although the fatigue resistance of the aluminum bearing alloy can be improved by adding copper and silicon or carrying out a solution process, the seizure resistance can be improved at the same time while the good fatigue resistance is maintained.

## Claims

1. An aluminium-based bearing alloy containing not less than 2 mass% but not more than 20 mass% of tin,
optionably containing not less than 2 mass% but not more than 6 mass% of silicon,
optionally containing at least one element selected from the group consisting of copper, zinc, and magnesium, a total amount of the selected element being not less than 0.1 mass% but not more than 7 mass%,
optionally containing an intermetallic compound composed of aluminum and at least two other elements,
wherein the number of intermetallic compound grains having a size smaller than 1 µm is not less than 300 in an observation area of 20 µm × 15 µm,
, wherein the at least two other elements that form the intermetallic compound in combination with aluminum is selected from the group consisting of manganese, vanadium, chromium, cobalt, iron, nickel, tungsten, titanium, and zirconium, a total amount of the selected elements being not less than 0.01 mass% but not more than 3 mass%,
balance alminium and unavoidable impurities;
**characterized in that** at least 70% of tin grains (2) in an observation area in a sliding surface have a size not less than 20 µm² but not more than 50 µm² expressed in an average region partitioned areas of the tin grains (2) measured by a region partitioning method.

## Patentansprüche

1. Lagerlegierung auf Aluminiumbasis, enthaltend nicht weniger als 2 Masse-% aber nicht mehr als 20 Masse-% Zinn,
optional enthaltend nicht weniger als 2 Masse-% aber nicht mehr als 6 Masse-% Silicium,
optional enthaltend mindestens ein Element ausgewählt aus der Gruppe, bestehend aus Kupfer, Zink und Magnesium, wobei die Gesamtmenge des ausgewählten Elements nicht weniger als 0,1 Masse-% aber nicht mehr als 7 Masse-% ist,
enthaltend eine intermetallische Verbindung bestehend aus Aluminium und mindestens zwei anderen Elementen,
wobei die Anzahl der Körner der intermetallischen Verbindung mit einer Größe von kleiner als 1 µm nicht weniger als 300 ist, in einem Beobachtungsbereich von 20 µm × 15 µm,
wobei die mindestens zwei anderen Elemente, die die intermetallische Verbindung in Kombination mit dem Aluminium bilden, ausgewählt sind aus der Gruppe, bestehend aus Mangan, Vanadium, Chrom, Kobalt, Eisen, Nickel, Wolfram, Titan und Zirkonium, wobei die Gesamtmenge der ausgewählten Elemente nicht weniger als 0,01 Masse-%, aber nicht mehr als 3 Masse-% ist,
der Rest Aluminium und unvermeidbare Verunreinigungen;
**dadurch gekennzeichnet, dass** mindestens 70% der Zinnkörner (2) in einem Beobachtungsbereich in einer Gleitoberfläche eine Größe von nicht weniger als 20 µm² aber nicht mehr als 50 µm² besitzen, ausgedrückt in einer Durchschnittsregion partitionierten Bereichen der Zinnkörner (2), gemessen durch eine Regionspartitionierungsmethode.

## Revendications

1. Alliage pour coussinet à base d'aluminium contenant pas moins de 2 % en masse mais pas plus de 20 % en masse d'étain,
contenant facultativement pas moins de 2 % en masse mais pas plus de 6 % en masse de silicium,
contenant facultativement au moins un élément choisi dans le groupe constitué par le cuivre, le zinc et le magnésium, une quantité totale de l'élément sélectionné étant non inférieure à 0,1 % en masse mais non supérieure à 7 % en masse,
contenant facultativement un composé intermétallique composé d'aluminium et d'au moins deux autres éléments,
où le nombre de grains de composé intermétallique ayant une taille plus petite que 1 µm n'est pas inférieur à 300 dans une zone d'observation de 20 µm x 15 µm,
dans lequel les au moins deux autres éléments qui forment le composé intermétallique en combinaison avec l'aluminium sont choisis dans le groupe constitué par le manganèse, le vanadium, le chrome, le cobalt, le fer, le nickel, le tungstène, le titane et le zirconium, une quantité totale des éléments sélectionnés étant non inférieure à 0,01 % en masse mais non supérieure à 3 % en masse,
le reste étant de l'aluminium et des impuretés inévitables ;
**caractérisé en ce qu'**au moins 70 % des grains d'étain (2) dans une zone d'observation dans une surface de glissement ont une taille non inférieure à 20 µm² et non supérieure à 50 µm² exprimée dans une région moyenne de zones cloisonnées des grains d'étain (2) mesurée par une méthode de cloisonnement de région.
